Europäisches Patentamt

European Patent Office

Office européen des brevets

(19)

(11) **EP 1 181 443 B1**

(12) **EUROPÄISCHE PATENTSCHRIFT**

| | |
|---|---|
| (45) Veröffentlichungstag und Bekanntmachung des Hinweises auf die Patenterteilung:<br>**17.08.2005 Patentblatt 2005/33** | (51) Int Cl.⁷: **F02M 51/06**, F16K 31/06,<br>H01F 7/16, H01F 7/08 |
| (21) Anmeldenummer: 01903591.4 | (86) Internationale Anmeldenummer:<br>**PCT/DE2001/000015** |
| (22) Anmeldetag: **05.01.2001** | (87) Internationale Veröffentlichungsnummer:<br>**WO 2001/057389 (09.08.2001 Gazette 2001/32)** |

(54) **ELEKTROMAGNETISCHES EINSPRITZVENTIL ZUR STEUERUNG EINER IN EINE VERBRENNUNGSKRAFTMASCHINE EINZUSPEISENDEN KRAFTSTOFFMENGE**

ELECTROMAGNETIC INJECTION VALVE FOR CONTROLLING A FUEL AMOUNT TO BE INJECTED INTO AN INTERNAL COMBUSTION ENGINE

SOUPAPE D'INJECTION ELECTROMAGNETIQUE POUR REGULER UNE QUANTITE DE CARBURANT DESTINEE A ALIMENTER UN MOTEUR A COMBUSTION INTERNE

| | |
|---|---|
| (84) Benannte Vertragsstaaten:<br>**DE FR GB IT** | (73) Patentinhaber: **ROBERT BOSCH GMBH**<br>**70442 Stuttgart (DE)** |
| (30) Priorität: **05.02.2000 DE 10005182** | (72) Erfinder: **GREIF, Hubert**<br>**D-71706 Markgroeningen (DE)** |
| (43) Veröffentlichungstag der Anmeldung:<br>**27.02.2002 Patentblatt 2002/09** | (56) Entgegenhaltungen:<br>DE-A- 3 241 521    FR-A- 2 031 027<br>US-A- 4 156 506 |

EP 1 181 443 B1

**Beschreibung**

Die Erfindung betrifft ein elektromagnetisches Einspritzventil zur Steuerung einer in eine Verbrennungsbrennkraftmaschine einzuspeisende Kraftstoffmenge mit den im Oberbegriff des Anspruchs 1 genannten Merkmalen.

Stand der Technik

Aus der US 4,156,506 ist ein elektromagnetisches Einspritzventil zur Steuerung einer in eine Verbrennungskraftmaschine einzuspritzenden Kraftstoffmenge bekannt, das über einen durch ein Elektromagnetspulensystem verlagerbaren Ventilkörper verfügt, wobei der Ventilkörper mit einem Magnetanker des Elektromagnetspulensystems zusammenwirkt. Das Elektromagnetspulensystem umfasst wenigstens zwei konzentrisch angeordnete Spulen, wobei die Spulen derart in einen Magnetkreis integriert sind, dass zwischen zwei benachbarten Spulen jeweils ein erster Polkörper angeordnet ist, und die innere und äußere Spule jeweils einen zweiten Polkörper benachbart ist, und die ersten und zweiten Polkörper Bestandteile des Magnetkreises des Elektromagnetspulensystems sind und jeweils benachbarte Spulen ineinander entgegengesetzten Richtung sind durch einen gemeinsamen Erregerstrom bestrombar sind.

Grundsätzlich geschieht der Aufbau eines magnetischen Flusses in einem Magnetkreis einer Spule nicht instantan mit Bestromung der Spule, sondern mit einer gewissen Zeitverzögerung. Die Zeitverzögerung des Feldaufbaus hängt von vielen Faktoren, wie einer Geometrie des Magnetkreises und insbesondere von einer Felddiffusion und erzeugten Wirbelströmen, ab. Wirbelströme sind elektrische Ströme, die in massiven elektrisch leitenden Körpern durch ein zeitlich veränderliches Magnetfeld, beispielsweise während des Aufbaus des magnetischen Feldes, induziert werden. Dabei wirken die Wirbelströme einer raschen Felddiffusion entgegen.

Die Zeitverzögerung zwischen Stromfluss in der Spule und Feldaufbau führt zu einer unerwünschten Verlängerung der Ansprechzeiten von elektromagnetischen Einspritzventilen. Ansprechzeiten von 100 μs oder weniger, die in modernen Einspritzsystemen erforderlich sind, werden gegenwärtig nur durch mittels Booster-Kondensatoren ermöglichten höheren Spannungen oder durch aufwendig geschaltete Doppelspulensysteme mit gegenseitig aufhebender Kraftwirkung ermöglicht. Nachteilig an diesen bekannten Systemen ist der hohe konstruktive Aufwand der elektrischen Schaltungen, der mit hohen Kosten und großem Raumbedarf einhergeht.

Vorteile der Erfindung

Das erfindungsgemäße elektromagnetische Einspritzventil bietet den Vorteil einer kurzen Ansprechzeit und einen geringen Schaltaufwand. Das erfindungsgemäße Einspritzventil umfasst hierzu ein Elektromagnetspulensystem mit zwei konzentrisch angeordneten Spulen, wobei die Spulen derart in einen Magnetkreis integriert sind, dass zwischen den zwei benachbarten Spulen ein erster Polkörper angeordnet ist, und die innere und die äußere Spule jeweils einem zweiten Polkörper benachbart ist, die ersten und zweiten Polkörper Bestandteil des Magnetkreises des Elektromagnetspulensystems sind, und jeweils benachbarte Spulen in einander entgegengesetztem Richtungssinn durch einen gemeinsamen Erregerstrom bestrombar sind. In einem derartigen zweispulensystem kommt es in einem innen liegenden ersten Polkörper aufgrund der entgegengesetzten Bestromung der Spulen zu einer einander entgegengesetzten Feldrichtung der erzeugten Wirbelströme und somit zu einer Auslöschung der Wirbelströme. Infolgedessen erfolgt die Felddiffusion und damit der Kraftaufbau des Magnetkreises erheblich schneller als in einem konventionellen Einspulensystem. Darüber hinaus wird in dem ersten Polkörper zwischen zwei Spulen das Magnetfeld konstruktiv verstärkt, da sich hier beide Magnetfelder gleichsinnig überlagern und somit ein größerer Magnetfluss erzeugt wird.

Die Polkörper sind derart dimensioniert, dass eine radiale Schnittfläche des mittleren ersten Polkörpers weitgehend der Summe der Schnittflächen der beiden benachbarten zweiten Polkörper entspricht. In einer derart gewählten Geometrie eines Magnetkreises wird eine gegenseitige Aufhebung von Kraftwirkungen zweier benachbarter Spulen verhindert.

Entsprechend einer vorteilhaften Ausführungsform weisen die Spulen annähernd identische Kenngrößen, insbesondere gleiche Induktivitäten, auf.

Es ist ferner bevorzugt vorgesehen, dass die Spulen in einer parallelen Schaltung angeordnet sind.

Weitere vorteilhafte Ausgestaltungen der Erfindung ergeben sich aus den übrigen, in den Unteransprüchen genannten Merkmalen.

Zeichnungen

Die Erfindung wird nachfolgend in Ausführungsbeispielen anhand der zugehörigen Zeichnungen näher erläutert. Es zeigen:

Figur 1    eine Schnittansicht eines elektromagnetischen Einspritzventiles gemäß dem Stand der Technik;

Figur 2    einen Magnetkreis in einem Einspulensystem;

Figur 3    einen Magnetkreis in einem erfindungsgemäßen Zweispulensystem und

Figur 4 ein Diagramm zur Veranschaulichung des Kraftaufbaus in einem Einspulen- und einem Zweispulenmagnetkreis.

Beschreibung der Ausführungsbeispiele

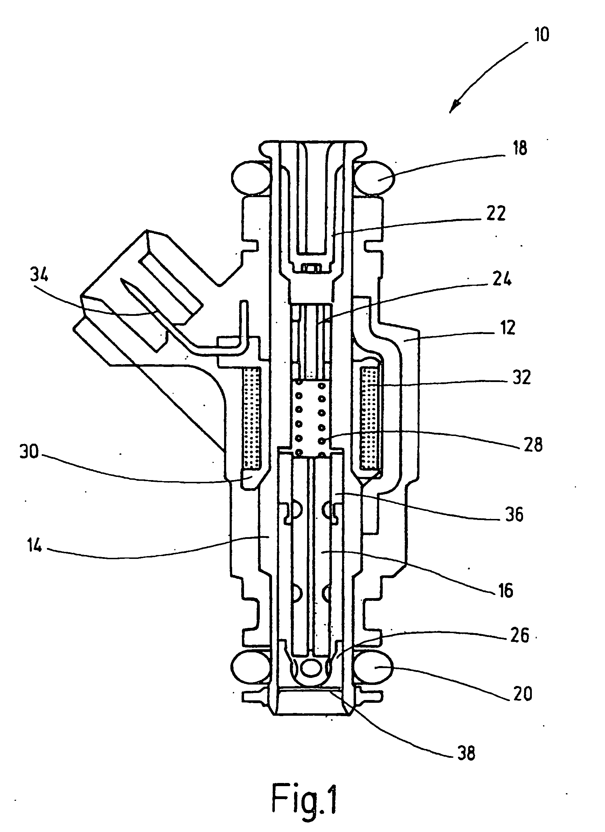

In Figur 1 ist die Schnittansicht eines elektromagnetischen Einspritzventiles gemäß dem Stand der Technik dargestellt. Das insgesamt mit 10 bezeichnete Einspritzventil besteht im Wesentlichen aus einem Ventilgehäuse 12, einem Ventilkern 14 und einer axial beweglichen Ventilnadel 16. Zwei O-Ringe 18, 20 dichten das Einspritzventil 10 gegen ein hier nicht dargestelltes Kraftstoffverteilerstück und ein ebenfalls nicht gezeigtes Saugrohr ab. Der in der Zeichnung von oben eintretende Kraftstoff strömt zunächst durch ein Kraftstoffsieb 22, welches das Einspritzventil 10 vor Verschmutzungen schützt. Der Kraftstoff gerät weiter über ein Strömungselement 24 in einen Hohlraum der Ventilnadel 16, von wo er durch seitliche Öffnungen der Ventilnadel 16 an einen Ventilsitz 26 gelangt. In einem Grundzustand des Einspritzventiles 10 drücken eine Feder 28 und die aus dem Kraftstoffdruck resultierende Kraft auf den Ventilsitz 26 und dichten das Kraftstoffversorgungssystem gegen das Saugrohr ab.

Das elektromagnetische Einspritzventil 10 weist ferner eine auf einen Spulenkörper 30 gewickelte Spule 32 auf, an die über einen elektrischen Anschluss 34 ein Erregerstrom angelegt werden kann. Bei Bestromung der Spule 32 wird in dem die Spule umgebenden Magnetkreis ein Magnetfeld erzeugt, durch welches ein Magnetanker 36 angezogen wird. Infolgedessen hebt sich die mit dem Magnetanker 36 kraftschlüssig verbundene Ventilnadel 16 von dem Ventilsitz 26 ab, so dass der Kraftstoff durch eine Spritzlochscheibe 38 in das Saugrohr austritt. Nach Abschaltung des Erregerstromes wird die Ventilnadel 16 durch die Feder 28 zurückgestellt, so dass sich das Ventil 10 schließt.

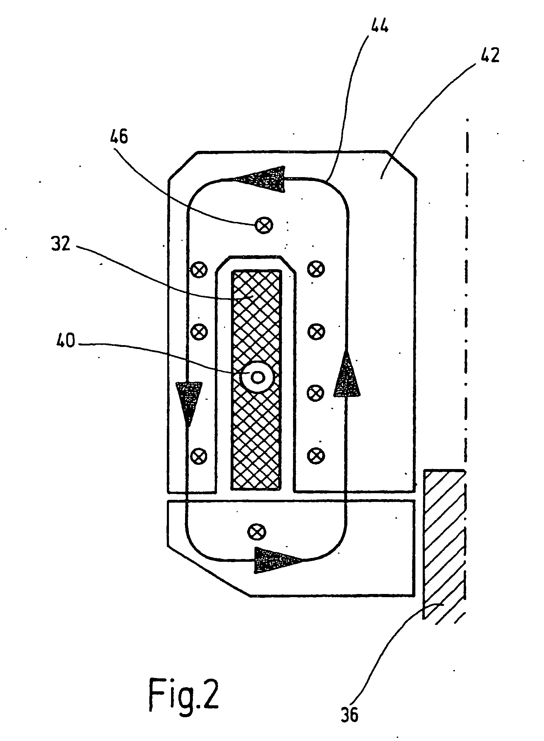

Der Aufbau eines Magnetfeldes in einem konventionellen Einspritzventil mit einem Einspulensystem ist in schematischer Weise in Figur 2 gezeigt. Wird eine Spule 32, von der hier lediglich eine Seite in Schnittansicht dargestellt ist, mit dem Erregerstrom 40 bestromt, so baut sich in einem die Spule 32 umgebenden Polkörper 42 ein magnetisches Feld 44 auf. Infolge des Aufbaus des magnetischen Feldes wird gemäß dem Induktionsgesetz

$$rot\ E = -\frac{\delta}{\delta t}B,$$

worin B eine Magnetflussdichte bedeutet, ein Wirbelstrom rot E 46 in dem Polkörper 42 erzeugt. Die Hauptstromrichtung des Wirbelstromes 46 ist dabei der Richtung des Erregerstromes 40 der Spule 32 entgegengesetzt. Die Entstehung des Wirbelstromes 46 setzt die Diffusionsgeschwindigkeit des Magnetfeldes 44 und damit die Aufbaugeschwindigkeit der auf den Anker 36 einwirkenden Kraft herab. Die Folge ist eine verlängerte Ansprech- oder Totzeit des elektromagnetischen Einspritzventiles 10.

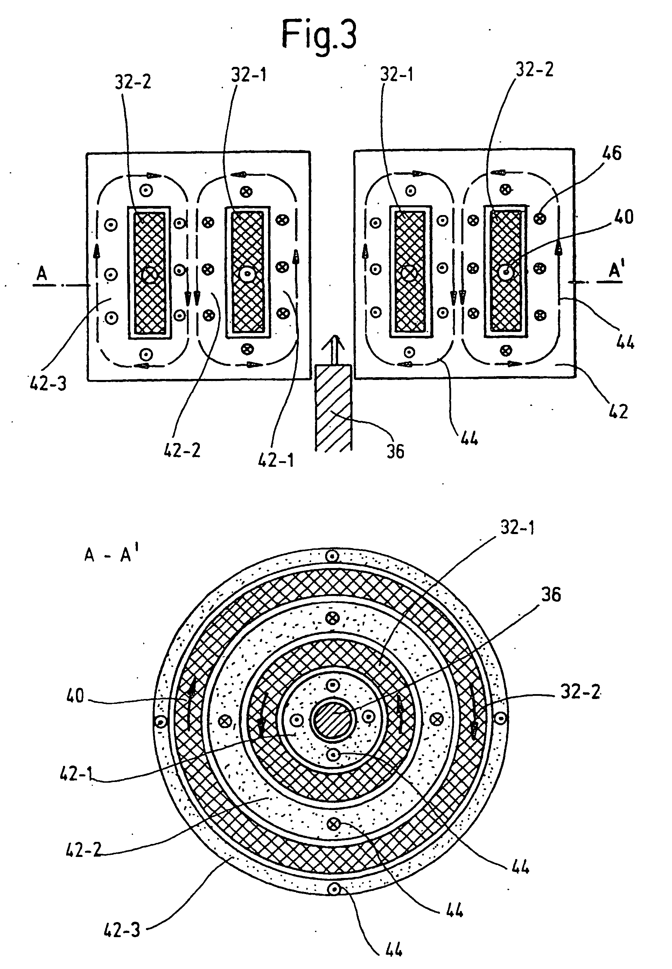

Um das Problem des verzögerten Feld- und Kraftaufbaus herkömmlicher Einspritzventile zu überwinden, werden gemäß der vorliegenden Erfindung zwei konzentrisch angeordnete Spulen eingesetzt. Figur 3 zeigt schematisch das Magnetfeld eines Elektromagnetspulensystems, mit einer innen liegenden Spule 32_1 und einer außen liegenden Spule 32_2. Im unteren Teil der Figur 3 ist eine radiale Schnittansicht des Doppelspulenmagnetkreises entlang der Achse A-A' dargestellt. Die beiden Spulen 32_1 und 32_2 werden mit dem Erregerstrom 40 in einander entgegengesetzter Richtung bestromt. Jede Spule 32_1, 32_2 wird auf beiden Spulenseiten von einem Polkörper 42 eingeschlossen. Die Bestromung der Spulen 32_1, 32_2 führt im umgebenden Polkörper 42 zu dem Aufbau eines Magnetfeldes 44 um jede Spule. Aufgrund der entgegengesetzten Stromrichtungen des Erregerstromes 40 der beiden Spulen 32_1, 32_2 überlagern sich im zentralen Polkörper 42_2 die beiden Magnetfelder 44 der Spulen 32_1, 32_2 gleichsinnig. Hier kommt es zu einer Feldverstärkung und somit zu einem größeren Magnetfluss. Auf der anderen Seite weisen die durch die magnetischen Felder 44 induzierten Wirbelströme 46 im innen liegenden Polkörper 42_2 eine einander entgegengesetzte Strömungsrichtung auf. In diesem Bereich kommt es daher zu einer Auslöschung der Wirbelströme 46 und des erzeugten Wirbelstromfeldes. Im innen liegenden Polkörper 42_2 kann daher die Felddiffusion ohne Wirbelstromverluste erfolgen, wodurch das Magnetfeld 44 signifikant schneller aufgebaut werden kann, als es im Falle des in Figur 2 gezeigten Einspulensystems der Fall ist. Die Ansprechzeit des Einspritzventiles 10 von der Bestromung der Spulen 32_1, 32_2 bis zur Einwirkung der Magnetkraft auf den Anker 36 ist somit insgesamt verkürzt. Ein weiterer Grund für den beschleunigten Kraftaufbau im Doppelspulenmagnetkreis ist durch die Felddiffusion gegeben, die an vier Durchmessern beziehungsweise an zwei Durchmessern pro eingesetzter Spule 32 stattfinden kann.

Beim Abschalten des Erregerstroms 40 kommen die gleichen physikalischen Effekte zum Tragen. Wiederum erfolgt im innen liegenden Polkörper 42_2 eine Auslöschung der durch das schwindende Magnetfeld 44 induzierten Wirbelströme 46, so dass die Felddiffusion erheblich schneller ablaufen kann.

Die vorteilhaften Wirkungen eines erfindungsgemäßen zweispulensystems werden dann optimal ausgenutzt, wenn der Magnetkreis derart ausgelegt ist, dass eine radiale Polfläche des innen liegenden Polkörpers 42_2 der Summe der beiden benachbarten Polflächen der Polkörper 42_1 und 42_3 entspricht (vgl. unteren Teil in Figur 3).

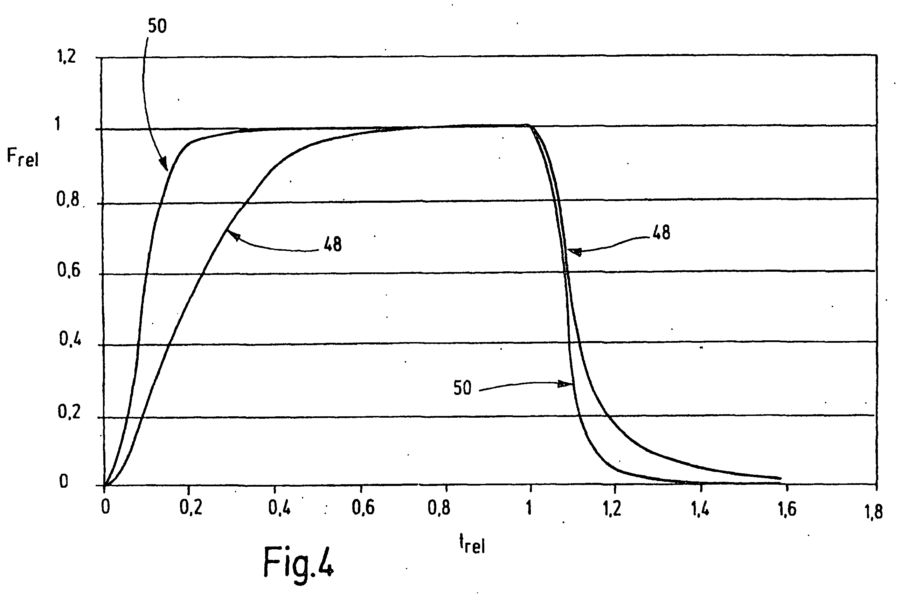

In Figur 4 ist die Geschwindigkeit des Kraftaufbaus eines Einspulenmagnetkreises und des erfindungsgemäßen Zweispulenmagnetkreises dargestellt.

Für eine bessere Vergleichbarkeit wurde hier die relative Kraft $F_{rel}$ in Abhängigkeit einer gemeinsamen relativen Zeitbasis $t_{rel}$ aufgetragen, wobei $t_{rel} = 0$ der Zeitpunkt $t_0$ der Bestromung der Spule 32 und $t_{rel} = 1$ der Zeitpunkt des Abschaltens der Spule 32 bedeutet. In einem konventionellen Einspulenmagnetsystem verläuft der Kraftanstieg und -abfall vergleichsweise flach (Graph 48). So ist eine relative Magnetkraft $F_{rel}$ von 0,8 etwa erst nach 0,33 Einheiten der gemeinsamen Zeitbasis $t_{rel}$ erreicht. Dagegen ist die maximale Magnetkraft nach Bestromung des Zweispulensystems zum Zeitpunkt $t_0$ wesentlich schneller erreicht (Graph 50), wobei eine Magnetkraft von 0,8 bereits nach etwa 0,12 Zeiteinheiten aufgebaut ist. Auch nach Abschaltung der Spule zum Zeitpunkt $t_1$ wird ein deutlich schnellerer Kraftabbau im Zweispulensystem beobachtet (Graph 50).

Insgesamt weist ein elektromagnetisches Einspritzventil gemäß der vorliegenden Erfindung gegenüber herkömmlichen Einspritzventilen eine erhebliche Verkürzung der Totzeiten mit extrem kurzen Anzugs- und Abfallzeiten auf. Dadurch wird auch eine präzisere Darstellung von kleinen Einspritzmengen erreicht. Durch ihren hochdynamischen Magnetkreis ist das erfindungsgemäße Einspritzventil für die Verwendung in modernen Benzin- und Dieseleinspritzsystemen hervorragend geeignet.

## Patentansprüche

1. Elektromagnetisches Einspritzventil zur Steuerung einer in eine Verbrennungskraftmaschine einzuspritzende Kraftstoffmenge, mit einem durch ein Elektromagnetspulensystem verlagerbaren Ventilkörper, wobei der Ventilkörper mit einem Magnetanker des Elektromagnetspulensystems zusammenwirkt, wobei das Elektromagnetspulensystem zwei konzentrisch angeordnete Spulen (32.1, 32.2) umfasst, die Spulen (32.1, 32.3) derart in einen Magnetkreis integriert sind, dass zwischen den zwei benachbarten Spulen ein erster Polkörper (42.2) angeordnet ist, und die innere und äußere Spule jeweils einem zweiten Polkörper (42.1, 42.3) benachbart ist, der erste und die zweiten Polkörper (42.1, 42.2, 42.3) Bestandteil des Magnetkreises des Elektromagnetspulensystems sind, und jeweils benachbarte Spule in einander entgegengesetzten Richtungen durch einen gemeinsamen Erregerstrom (40) bestrombar sind, **dadurch gekennzeichnet, dass** die Polkörper derart dimensioniert sind, dass eine radiale Schnittfläche des mittleren ersten Polkörpers weitgehend der Summe der Schnittflächen der benachbarten zweiten Polkörper entspricht.

2. Elektromagnetisches Einspritzventil nach Anspruch 1, **dadurch gekennzeichnet, dass** die Spulen gleiche Kenngrößen aufweisen.

3. Elektromagnetisches Einspritzventil nach einem der vorhergehenden Ansprüche, **dadurch gekennzeichnet, dass** die Spulen parallel geschaltet werden.

4. Elektromagnetisches Einspritzventil nach einem der vorhergehenden Ansprüche, **dadurch gekennzeichnet, dass** der Ventilkörper (16) und der Magnetanker (36) kraftschlüssig miteinander verbunden sind.

## Claims

1. Electromagnetic injection valve for controlling a quantity of fuel which is to be injected into an internal combustion engine, having a valve body which can be moved by a system of electromagnetic coils, the valve body interacting with a magnet armature of the system of electromagnetic coils, the system of electromagnetic coils comprising two concentrically arranged coils (32.1, 32.2) which are integrated in a magnetic circuit in such a way that a first pole body (42.2) is arranged between the two adjacent coils, and the inner and outer coils are each adjacent to a second pole body (42.1, 42.3), the first pole body and the second pole bodies (42.1, 42.2, 42.3) are constituent parts of the magnetic circuit of the system of electromagnetic coils, and power can be supplied to respectively adjacent coils in opposite directions by means of a common exciter current (40), **characterized in that** the pole bodies are dimensioned in such a way that a radial plane section of the middle first pole body largely corresponds to the sum of the plane sections of the adjacent second pole bodies.

2. Electromagnetic injection valve according to Claim 1, **characterized in that** the coils have identical characteristics.

3. Electromagnetic injection valve according to one of the preceding claims, **characterized in that** the coils are connected in parallel.

4. Electromagnetic injection valve according to one of the preceding claims, **characterized in that** the valve body (16) and the magnet armature (36) are connected to one another in a positive manner.

## Revendications

1. Injecteur électromagnétique pour commander une quantité de carburant à injecter dans un moteur à combustion interne, comportant un corps de soupape déplacé à l'aide d'un système de bobines électromagnétiques, dans lequel

le corps de soupape interagit avec un induit d'aimant du système de bobines électromagnétiques,

le système de bobines électromagnétiques comprend deux bobines (32.1, 32.2) concentriques,

les bobines (32.1, 32.2) sont intégrées dans un circuit magnétique de telle manière qu'un premier noyau polaire (42.2) est placé entre les deux bobines voisines et, la bobine intérieure et la bobine extérieure sont chacune voisine d'un deuxième noyau polaire (42.1, 42.3),

le premier et les deuxièmes noyaux polaires (42.1, 42.2, 42.3) sont des composants du circuit magnétique du système de bobines électromagnétiques, et

chacune des bobines voisines peut être traversée par un courant d'excitation (40) commun dans des directions opposées l'une à l'autre, **caractérisé en ce que**

les noyaux polaires sont dimensionnés de telle manière qu'un plan radial de section du premier noyau polaire central correspond en grande partie à la somme des plans de section des deuxièmes noyaux polaires voisins.

2. Injecteur électromagnétique selon la revendication 1,
**caractérisé en ce que**
les bobines ont les mêmes paramètres caractéristiques.

3. Injecteur électromagnétique selon l'une des revendications précédentes,
**caractérisé en ce que**
les bobines sont montées en parallèle.

4. Injecteur électromagnétique selon l'une des revendications précédentes,
**caractérisé en ce que**
le corps de soupape (16) et l'induit d'aimant (36) sont reliés par combinaison de forces.

Fig.1

Fig.2

# Fig.3

8

Fig.4